# EUROPÄISCHE PATENTSCHRIFT

(11) **EP 2 720 826 B1**
(45) Veröffentlichungstag und Bekanntmachung des Hinweises auf die Patenterteilung: **10.04.2019**
(21) Anmeldenummer: 12742836.5
(22) Anmeldetag: 20.07.2012
(51) Int. Cl.: B23P 15/04, F01D 5/28, B23K 15/00, B23K 26/34, B22F 5/04, B22F 3/105, B23P 6/00, F01D 5/00, B22F 7/08

(54) **VERFAHREN ZUM ERZEUGEN EINER SCHAUFEL FÜR EINE STRÖMUNGSKRAFTMASCHINE**
METHOD FOR PRODUCING A BLADE FOR A TURBOMACHINE
PROCÉDÉ DE FABRICATION D'UNE AUBE DE TURBOMACHINE

(30) Priorität: 01.08.2011 DE 102011080187
(43) Veröffentlichungstag der Anmeldung: 23.04.2014
(73) Patentinhaber: Siemens Aktiengesellschaft, 80333 München (DE)
(72) Erfinder: GÖHLER, Jens, 01594 Stauchitz (DE); KERNSTOCK, Frank, Windhoek (NA); REHME, Olaf, 20148 Hamburg (DE); SCHÄFER, Martin, 10557 Berlin (DE)
(86) Internationale Anmeldenummer: PCT/EP2012/064248
(87) Internationale Veröffentlichungsnummer: WO 2013/017433

(56) Entgegenhaltungen:
- EP-A1- 2 218 530
- EP-A1- 2 319 641
- EP-B1- 1 620 225
- WO-A2-2005/016588
- DE-A1-102009 048 665
- DE-B3-102006 030 365
- FR-A1- 2 954 200
- US-A1- 2011 129 600

## Beschreibung

Die Erfindung betrifft ein Verfahren zum Erzeugen einer Schaufel für eine Strömungskraftmaschine, insbesondere einer Leitschaufel, bei dem ein Grundkörper der Schaufel hergestellt wird und dieser Grundkörper mit mindestens einer den Grundkörper zur fertigen Schaufel ergänzenden Schaufelkomponente bleibend verbunden wird gemäß dem Oberbegriff des Anspruchs 1. Ein solches Verfahren ist aus der EP 2 319 641 A1 bekannt.

Eine Schaufelkomponente der eingangs angegebenen Art und ein Verfahren zu deren Herstellung ist beispielsweise gemäß der DE 10 2006 030 365 B3 beschrieben. Hierbei handelt es sich um eine Schaufel, die mit einer nicht sichtbaren Markierung versehen werden soll. Diese Markierung stellt eine Schaufelkomponente dar, die den Grundkörper der Schaufel dahingehend ergänzt, dass eine zusätzliche Funktionalität hinzukommt, nämlich dass die Schaufel mittels eines geeigneten Detektionsgerätes einem bestimmten Schaufeltyp zugeordnet werden kann.

Weiterhin ist es aus der DE 10 2009 048 665 A1 bekannt, dass Turbinenschaufeln mittels additiver Herstellungsverfahren hergestellt werden können. Hierbei wird die gesamte Schaufel mit einem additiven Herstellungsverfahren wie beispielsweise dem selektiven Laserschmelzen aufgebaut, wobei im hohlen Innenraum der Schaufel komplexe geometrische Stützstrukturen aufgebaut werden können. Dies hilft bei Einsparungen von Bauteilmasse, eine stabile Schaufel zu erzeugen. Hierbei werden sowohl die vergleichsweise filigrane Stützstruktur im Inneren der Schaufel sowie die im Vergleich hierzu massiven Wandbereiche der Schaufel mit dem additiven Fertigungsverfahren hergestellt.

Gemäß der EP 1 620 225 B2 ist es auch bekannt, dass Turbinenschaufeln repariert werden können, indem mittels eines Rapid Manufacturing Prozesses Ersatzteile als Passstücke für zu reparierende Stellen der Turbinenschaufel hergestellt werden.

Der EP 2 218 530 A1 lässt sich ein generatives Fertigungsverfahren für Komponenten von Gasturbinen entnehmen. Es ist vorgesehen, dass die Schaufelsegmente, aus denen der Schaufelring des Turbinenläufers besteht, generativ hergestellt werden können. Diese Schaufelsegmente können auch direkt auf einen fertigen bzw. vorbereiteten Träger erfolgen. Dieser Träger ist gleichzeitig ein Konstruktionselement des fertig gestellten Turbinenläufers.

Gemäß der EP 2 319 641 A1 ist beschrieben, dass beim Herstellen von Bauteilen durch Laserschmelzen Einsatzstücke in das in Herstellung befindliche Bauteil eingesetzt werden können und diese in nachfolgenden Herstellungsschritten von Bauteillagen in das entstehende Bauteil eingebettet werden können. Gemäß der WO 2005/016588 A2 ist beschrieben, dass Bauteile wie Schaufelsegmente von Gasturbinen mittels Laserauftragsschweißen repariert oder hergestellt werden können. Hierbei kann ein Grundkörper verwendet werden, der mittels des Laserauftragsschweißens mit einem weiteren Material umgeben wird.

Gemäß der FR 2 954 200 A1 ist beschrieben, dass einer Verkleidung beispielsweise für eine Turbinenschaufel aus mehreren Teilen zusammengesetzt werden kann, die einzeln hergestellt werden und nach ihrer Herstellung auf dem Bauteil zu einer zusammenhängenden Verkleidung zusammengesetzt werden.

Die Aufgabe der Erfindung liegt darin, ein Fertigungsverfahren für Schaufeln von Strömungskraftmaschinen anzugeben, mit dem Schaufeln hergestellt werden können, deren Abmessungen der Ergänzungsstruktur die Baugrößenkapazität der verfügbaren
additiven Fertigungsanlage übersteigen.

Die Aufgabe wird mit dem eingangs genannten Verfahren erfindungsgemäß dadurch gelöst, dass nur die mindestens eine Schaufelkomponente der Schaufel mit einem additiven Fertigungsverfahren hergestellt wird, während der Grundkörper der Schaufel, der auch die Schaufelkomponente trägt, mittels eines anderen Verfahrens hergestellt wird. Hierdurch kann vorteilhaft ein Grundkörper der Schaufel hergestellt werden, der den Großteil der Schaufelmasse bildet. An diesen Grundkörper werden gewöhnlich andere Anforderungen gestellt, als an bestimmte Bereiche der Schaufel, die durch die Schaufelkomponente gebildet werden. Beispielsweise könnte die Schaufelkomponente der Anströmbereich einer Schaufel sein, welcher einer besonderen erosiven Beanspruchung beispielsweise in einer Dampfturbine ausgesetzt ist. Diese Schaufelkomponente kann dann mittels des erfindungsgemäß angewendeten additiven Fertigungsverfahrens aus einem anderen Werkstoff hergestellt werden. Daher ist es nur notwendig, diesen Bereich der Schaufelkomponente mittels des additiven Fertigungsverfahrens herzustellen. Vorteilhaft kann dadurch ein herstellungsbedingter Verzug der gesamten Schaufel gering gehalten wird. Außerdem eignen sich additive Fertigungsverfahren insbesondere zur Herstellung kleiner Strukturen, da bei voluminöseren Strukturen der Fertigungsaufwand beträchtlich steigt. Durch Herstellung des Grundköpers, beispielsweise durch Gießen oder Zusammenfügen von Blechen lässt sich einerseits ein Großteil der Schaufelmasse mittels eines kostengünstigen Herstellungsverfahrens erzeugen, andererseits können Bauteilbereiche, an die besondere Anforderungen gestellt werden, mit einem individuell auf diese Anforderungen angepassten additiven Herstellungsverfahren hergestellt werden.

Als additives Herstellungsverfahren eignet sich insbesondere das selektive Laserschmelzen. Hierbei kann gemäß einer vorteilhaften Ausgestaltung des erfindungsgemäßen Verfahrens die mindestens eine ergänzende Schaufelkomponente mit dem selektiven Laserschmelzen oder einem anderen additiven Herstellungsverfahren auf dem als Unterlage dienenden Grundkörper direkt hergestellt werden. Hierbei ist zu bemerken, dass eine Unterlage für additive Fertigungsverfahren immer erforderlich ist. Diese dient zur Herstellung der ersten Lage der lagenweise aufzubauenden Schaufelkomponente. Wird der Grundkörper als Unterlage verwendet, so wird hierdurch vorteilhaft bereits eine Verbindung zwischen Grundkörper und Schaufelkomponente erzeugt, so dass ein anschließendes Ablösen der Schaufelkomponente von der Unterlage und Verbinden der Schaufelkomponente mit dem Grundkörper nicht erfolgen muss. Dieses Fertigungsverfahren eignet sich insbesondere für die Serienproduktion von Turbinenschaufeln, wo ein zur Aufnahme des Grundkörpers geeignetes Werkzeug in die Maschine des additiven Fertigungsverfahrens eingesetzt werden kann.

Letzteres Verfahren eignet sich insbesondere auch gut für Reparaturverfahren, bei denen als Grundköper eine Schaufel mit einer Beschädigung verwendet wird, die Beschädigung durch Erzeugen einer Aussparung im Bereich der Beschädigung entfernt wird und als ergänzende Schaufelkomponente ein Passstück für die Aussparung erzeugt wird. Wird beispielsweise die Aussparung mit einer CNC-Fräse in der Schaufel erzeugt, so liegen die geometrischen Daten der so entstehenden Fügefläche in der Aussparung bereits vor. Diese können in dem additiven Fertigungsverfahren direkt verwendet werden, um das Passstück formgenau herzustellen. Hierbei entsteht der Grundkörper aus einer gebrauchten Schaufel also dadurch, dass eine beschädigte Stelle durch Einbringen einer Aussparung entfernt wird. Der Grundkörper ist somit die mit der Aussparung versehene Schaufel. Das Passstück ist die zu ergänzende Schaufelkomponente und kann direkt in der Schaufel hergestellt werden, indem diese derart in der Anlage des additiven Fertigungsverfahrens positioniert wird, dass die Aussparung mit Material unter Ausbildung des Passstückes aufgefüllt werden kann. Verfahrensbedingt ist hierbei die Fügefläche für das additive Fertigungsverfahren nur zweidimensional zu wählen.

Als Material zur Herstellung der Schaufelkomponente kann allgemein ein anderes Material verwendet werden als das Material des Grundkörpers. Insbesondere kann bei einem Reparaturverfahren für das Passstück (Schaufelkomponente) auch ein anderes Material verwendet werden, als vor der Reparatur für den Bereich der Beschädigung vorgesehen war. Hierbei kann die Tatsache, dass die Schaufel Beschädigungen erfahren hat, als Anlass genommen werden, die Bauteileigenschaften in diesem gefährdeten Bereich durch Wahl eines härteren Materials zu verbessern. Hierdurch können vorteilhaft Schaufeln, die aus Gründen des Fertigungsaufwandes einteilig hergestellt wurden, nachträglich durch das Reparaturverfahren mit einem verbesserten Eigenschaftsprofil ausgestattet werden. Insbesondere kann hierbei der Verschleißwiderstand verbessert werden. Der Grundkörper der Schaufel kann beispielsweise wie üblich aus einer Nickel-Basislegierung (Zum Beispiel bei Gasturbinen) oder einem Chromstahl (bei Dampfturbinen) hergestellt sein. Bei der Reparatur oder auch der Herstellung der Schaufel kann dann für die Schaufelkomponente eine Kobalt-Basislegierung verwendet werden, welche im Vergleich zu Nickel-Basislegierungen oder Chromstahl einen verbesserten Verschleißwiderstand aufweist.

Erfindungsgemäß ist außerdem vorgesehen, dass mehrere ergänzende Schaufelkomponenten hergestellt werden, die direkt aneinanderstoßen und zusammen eine Ergänzungsstruktur für den Grundköper ergeben. Hierbei übersteigen die Abmessungen der Ergänzungsstruktur die Baugrößenkapazität der verwendeten additiven Fertigungsanlage. Vorteilhaft kann auf diese Weise auch eine Ergänzungsstruktur hergestellt werden, die an sich größer ist, als die übliche herstellbare Baugröße einer bestimmten Fertigungsanlage. Dabei ist es möglich, dass die zusammen eine Ergänzungsstruktur bildenden Schaufelkomponenten direkt auf dem Grundkörper der Schaufel hergestellt werden, wobei dieser Grundkörper in der additiven Fertigungsanlage dann jeweils nach Beendigung der Herstellung einer Schaufelkomponente verschoben werden muss, damit die benachbarte Schaufelkomponente direkt auf dem Grundkörper hergestellt werden kann.

Gemäß einer Ausgestaltung der Schaufel kann vorgesehen werden, dass in die mindestens eine Schaufelkomponente eine weitere Funktionalität der Schaufel integriert ist. Als Funktionalität werden Funktionen verstanden, die die Schaufel erfüllen muss und die durch die Schaufelkomponente vorteilhaft auf einfache Weise realisiert werden können. Insbesondere kann die weitere Funktionalität aus Entwässerungsschlitzen bestehen, die der Schaufel eine vergleichsweise komplexe Geometrie verleihen und daher additiv mit ihrer Endgeometrie ohne Nachbearbeitung hergestellt werden können. Hierbei kann der Umstand genutzt werden, dass mittels additiver Fertigungsverfahren auch Hinterschneidungen ohne Probleme hergestellt werden können, so dass die Hohlräume hinter den Entwässerungsschlitzen im Inneren der Schaufel während des additiven Fertigungsverfahrens entstehen.

Weitere Funktionalitäten können durch die Schaufelkomponente realisiert werden. Beispielsweise ist eine Markierung der Schaufel entsprechend der eingangs angegebenen DE 10 2006 030 365 B3 möglich. Dabei wird die Komponente additiv mit dem erforderlichen magnetisch auslesbaren Muster mit einem magnetisierbaren Material beispielsweise in einer Aussparung in der Oberfläche der Schaufel hergestellt und dann in einem zweiten additiven Fertigungsschritt mit dem Material der Schaufel aufgefüllt.

Auch kann eine Stützstruktur gemäß der DE 10 2009 048 665 A1 auf einem beispielsweise gegossenen Grundkörper hergestellt werden, so dass nicht die gesamte Außenwand der Schaufel additiv hergestellt werden muss. Dieses Verfahren ist insbesondere vorteilhaft durchzuführen, wenn der Grundkörper als Unterlage für die additive Herstellung der Stützstruktur dient.

Weiterhin können Kühlluftlöcher und die mit diesen Kühlluftlöchern verbundenen Kanalstrukturen im Inneren der Schaufel additiv hergestellt werden. Kühlluftlöcher kommen beispielsweise bei Turbinenschaufeln zum Einsatz, um auf den thermisch am stärksten beanspruchten Turbinenschaufeln einen Film aus Kühlluft zu erzeugen und damit die thermische Beanspruchung zu verringern.

Auch ist es möglich, Verschleißindikatoren im Inneren der Schaufel additiv herzustellen. Hierbei kann es sich beispielsweise um Schaufelbereiche handeln, welche aus einem Material hergestellt werden, welches sich farblich von dem restlichen Schaufelmaterial unterscheidet. Bei einem verschleißbedingten Abtrag der Schaufeloberfläche kommt dieses Material irgendwann zum Vorschein und gestattet eine optische Verschleißkontrolle des Bauteils. Dies kann insbesondere bei Bauteilbereichen der Schaufel erfolgen, die ohnehin stark verschleißbeansprucht sind und deshalb additiv mit einem anderen Material hergestellt werden als der Grundkörper der Schaufel. Es ist beispielsweise möglich, beim Aufbringen der additiven Materiallagen den Farbstoff, der beispielsweise aus keramischen Partikeln bestehen kann, nur in einer Lage vorzusehen, wobei durch die Schichtdicke der Lagen eindeutig definiert ist, in welchem Abstand zur Oberfläche der fertig gestellten Schaufelkomponente der Farbstoff eingelagert ist. Die oberhalb der eingefärbten Lage aufgebrachten Lagen an Schaufelwerkstoff entsprechen dann in ihrer Dicke genau dem zulässigen verschleißbedingten Abtrag. Derartige Verschleißindikatoren können beispielsweise an der Anströmkante der Schaufel Verwendung finden.

Entwässerungsschlitze können bei Leitschaufeln von Dampfturbinen insbesondere auf der Saug- und Druckseite vorgesehen werden. Bei Leitschaufeln, die im Bereich der Expansion im Nassdampfbereich von Dampfturbinen zum Einsatz kommen, werden normalerweise solche Entwässerungsschlitze vorgesehen. Diese Schaufeln werden typischerweise aus Blech geformt, wobei zwei Schalen derart zusammengesetzt werden, dass ein Hohlraum entsteht. Diese Bleche werden miteinander verschweißt.

Um ein Abführen des Wassers aus der wandnahen Strömung zu gewährleisten, wird das kondensierte Wasser von der Oberfläche der Schaufel abgesaugt, indem an die Entwässerungsschlitze ein Unterdruck angelegt wird. Hierdurch kann die Dicke des Wasserfilms verringert werden, was zu einer Verringerung des Verschleißes der Leitschaufeln führt. Eine andere Möglichkeit der Verwendung der Entwässerungsschlitze liegt darin, dass durch diese Dampf zugeführt werden kann, welcher die Schaufeloberfläche aufheizt und den auf dieser befindlichen Wasserfilm zum Verdampfen bringt und den Aufbau eines neuen Wasserfilms verhindert.

Die Anordnung der Schlitze kann auf die Erfordernisse eines Absaugens von Wasser oder Zuführens von Wasserdampf angepasst werden, wobei sich komplizierte Schlitzgeometrien ergeben können. Diese lassen sich vorteilhaft besonders einfach durch das additive Fertigungsverfahren erzeugen. Auch Änderungen im Design können allein softwaretechnisch umgesetzt werden und dann während des additiven Fertigungsverfahrens direkt in die Produktion eingehen, ohne dass neue Werkzeuge wie Lehren oder Stanzwerkzeuge erzeugt werden müssen. Weitere Einzelheiten der Erfindung werden im Folgenden anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen:
- Figur 1 bis 3: ausgewählte Schritte eines Ausführungsbeispiels des erfindungsgemäßen Verfahrens zum Erzeugen einer Schaufel, wobei die erzeugte Schaufel jeweils im Querschnitt dargestellt ist,
- Figur 4: ein Ausführungsbeispiel der Schaufel im Querschnitt und
- Figur 5: ein anderes Ausführungsbeispiel der Schaufel schematisch als Aufsicht.

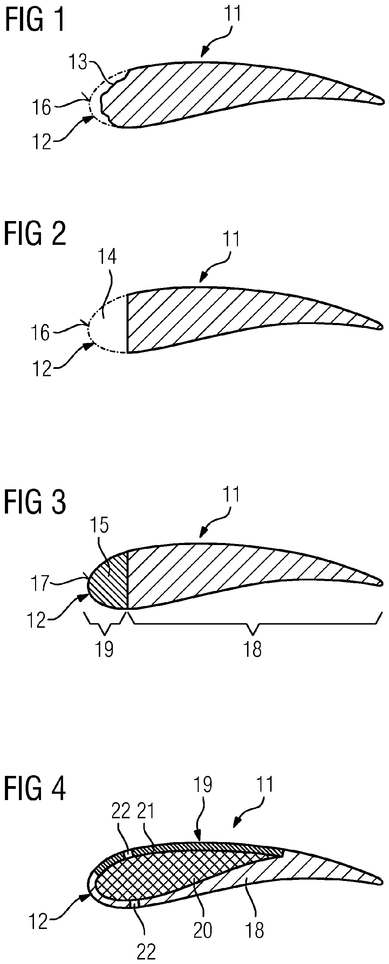

In Figur 1 ist eine Schaufel 11 dargestellt, bei der es sich beispielsweise um eine Leitschaufel für eine Dampfturbine handelt. Diese weist eine Anströmkante 12 auf, welche im fortschreitenden Betrieb der Schaufel 11 erosiv angegriffen wurde. In Figur 1 sind Beschädigungen 13 angedeutet.

Gemäß Figur 2 wird nun ein Reparaturverfahren vorbereitet. Der Bereich der vorderen Schaufelkante wird beispielsweise spanend entfernt, wodurch sich eine Aussparung 14 ergibt. Wie sich Figur 3 entnehmen lässt, wird für diese Aussparung ein Passstück 15 mittels Laserschmelzens hergestellt, welches genau die Gestalt der Aussparung hat und wodurch eine Kontur 16 (siehe Figuren 1 und 2) des konstruktiv vorgesehenen Schaufelprofils wiederhergestellt wird. Wie Figur 1 zu entnehmen ist, wich die tatsächliche Schaufelkontur wegen der Beschädigungen 13 von der konstruktiv vorgesehenen vor der Reparatur nämlich ab.

In Figur 3 nicht näher dargestellt ist, wie das Passstück additiv hergestellt werden kann. Hierzu wird eine übliche Anlage für das selektive Laserschmelzen verwendet, bei dem das Teil in einem metallischen Pulverbett mit einem Laserstrahl durch lokales Aufschmelzen lagenweise hergestellt wird. Hierzu wird das Pulverbett jeweils um eine Pulverschicht ergänzt und das Bauteil in dieser Pulverschicht durch Aufschmelzen hergestellt. Anschließend erfolgt die Herstellung der nächsten Lage in der nächsten Pulverschicht. Hierbei können beispielsweise die CAD-Daten der konstruktiv vorgesehenen Schaufelgeometrie direkt verwendet werden. Als Unterlage für die Herstellung des Passstückes 15 kann entweder die Oberfläche 17 der Aussparung 14 dienen oder es wird die in der additiven Fertigungsanlage zur Verfügung stehende Unterlage des Werkstücktisches verwendet.

Das reparierte Bauteil gemäß Figur 3 besteht dann aus einem Grundkörper 18 aus demjenigen Schaufelmaterial, welches bei der Erstherstellung der Schaufel 11 verwendet wurde. Das Passstück 15 bildet eine Schaufelkomponente, welche im Ausführungsbeispiel gemäß Figur 3 auch aus einem anderen Werkstoff hergestellt ist. Obwohl dem Grundkörper eine Nickel-Basislegierung verwendet wurde, besteht die Schaufelkomponente nun aus einer Kobalt-Basislegierung. Hierdurch wird der Verschleißwiderstand in diesem Schaufelbereich verbessert.

Die Schaufel gemäß Figur 4 könnte beispielsweise eine Turbinenschaufel sein, wobei eventuelle Schichten auf der Oberfläche der Schaufel nicht dargestellt sind. Den Grundkörper 18 bildet ein Gussteil, welches eine Unterschale für die herzustellende hohle Turbinenschaufel bildet. In dieser Unterschale wird durch das additive Fertigungsverfahren, beispielsweise Lasercladding (Beim Laserschmelzen die Unterschale eine ebene Fläche als Basis haben da der Abziehbalken für die Pulverschicht darüber gleiten muss - siehe nächster Absatz Eine dreidimensionale Geometrie ist nur durch das Lasercladding ode Microcladding zu realisieren), eine Stützstruktur in Form eines Raumgitters 20 erzeugt, welches im selben Fertigungsgang durch eine Deckstruktur 21 abgeschlossen wird. Die Deckstruktur 21 bildet in der fertig gestellten Schaufel 11 dann die Oberschale, so dass sich das Raumgitter 20 in dem durch die Oberschale und die Unterschale gebildeten Hohlraum befindet. Außerdem weist die Deckstruktur Kühlluftlöcher 22 auf, so dass durch Erzeugen eines Überdruckes in dem Hohlraum ein Kühlluftfilm auf der Oberfläche der Schaufel ausgebildet werden kann. Solche Kühlluftlöcher 22 können auch in dem Grundkörper 18 vorgesehen sein. Dieser kann beispielsweise aus einem Gussteil bestehen, wobei die Kühlluftlöcher durch Bohren erzeugt werden können.

Denkbar ist auch eine Herstellung, dass das Teil 18 gemäß Figur 4 zusammen mit dem Raumgitter 20 mittels Laserschmelzen hergestellt wird und anschließend mit dem in dieser Variante konventionell zum Beispiel durch Blech Biegen hergestellten Deckel 21 verschlossen wird. Hierbei liegt die Fläche der Bauplattform parallel zur Zeichenebene.

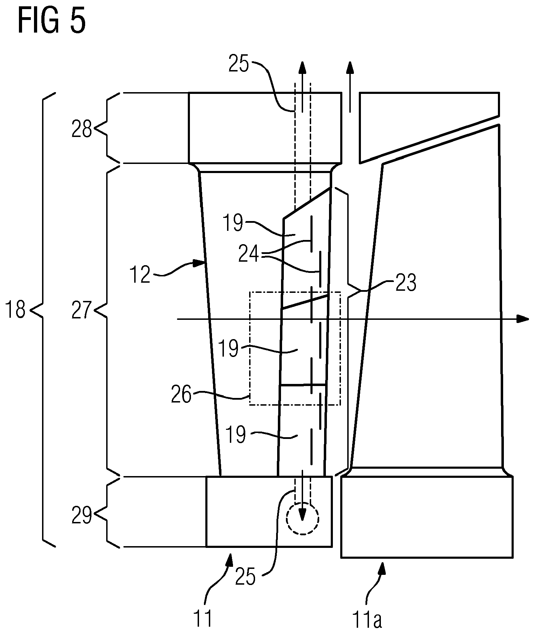

Die als Leitschaufel ausgeführte Schaufel 11 ist in Figur 5 als Aufsicht dargestellt. Auch eine weitere Schaufel 11a, die eine Laufschaufel bildet, ist als Aufsicht dargestellt. Die Leitschaufel 11 kann in einer Dampfturbine eingesetzt werden. Es sind mehrere Schaufelkomponenten 19 zu erkennen, welche gemeinsam eine Ergänzungsstruktur 23 ergeben, die Entwässerungsschlitze 24 aufweist. Diese sind mit einem gestrichelt angedeuteten Saugkanal 25 verbunden, so dass ein Flüssigkeitsfilm, der sich auf der Schaufel 11 bildet, abgesaugt werden kann.

Die Ergänzungsstruktur 23 ist dreiteilig aus drei Schaufelkomponenten 19 aufgebaut. Jede der Schaufelkomponenten 19 ist klein genug, damit diese in einer nicht näher dargestellten additiven Fertigungsanlage hergestellt werden kann. Angedeutet ist eine Maximalgröße 26, die Bauteile allgemein bei der verwendeten additiven Fertigungsanlage haben dürfen. Es zeigt sich daher, dass die Ergänzungsstruktur 23 nicht als eine einzige Schaufelkomponente hätte hergestellt werden können.

Weiterhin ist in Figur 5 zu erkennen, dass der Grundkörper neben einem Schaufelblatt 27 auch einen vergleichsweise massiven Schaufelfuß 28 und Schaufelkopf 29 aufweist. Diese drei Bauteilbereiche können einstückig als Grundkörper 18 der Leitschaufel hergestellt werden. Die Ergänzungsstruktur 23 besteht dann nur aus den drei Schaufelkomponenten 19, die die vergleichsweise komplizierte Geometrie mit den Entwässerungsschlitzen 24 aufweist.

## Patentansprüche

1. Verfahren zum Erzeugen einer Schaufel für eine Strömungskraftmaschine, insbesondere einer Leitschaufel, bei dem ein Grundkörper (18) der Schaufel (11) hergestellt wird und dieser Grundkörper (18) mit mindestens einer den Grundkörper (18) zur fertigen Schaufel (11) ergänzenden Schaufelkomponente (19) bleibend verbunden wird, wobei nur die mindestens eine Schaufelkomponente (19) mit einem additiven Fertigungsverfahren direkt auf dem Grundkörper (18) hergestellt wird,
**dadurch gekennzeichnet,**
**dass** mehrere ergänzende Schaufelkomponenten direkt auf dem Grundköper der Schaufel hergestellt werden, wobei die Schaufelkomponenten direkt aneinander stoßen und zusammen eine Ergänzungsstruktur (23) für den Grundkörper (18) ergeben, deren Abmessungen die Baugrößenkapazität der verwendeten additiven Fertigungsanlage übersteigen, indem der Grundkörper zwischen der Herstellung der ergänzenden Schaufelkomponenten (19) jeweils in der additiven Fertigungsanlage verschoben wird, damit die jeweils benachbarte Schaufelkomponente direkt auf dem Grundkörper hergestellt werden kann.

2. Verfahren nach Anspruch 1,
**dadurch gekennzeichnet,**
**dass** die mindestens eine ergänzende Schaufelkomponente (19) mit dem Fertigungsverfahren auf dem als Unterlage dienenden Grundkörper (18) hergestellt wird.

3. Verfahren nach einem der vorangehenden Ansprüche,
**dadurch gekennzeichnet,**
**dass** die mindestens eine Schaufelkomponente (19) aus einem anderen Material gefertigt wird, als der Grundkörper.

4. Verfahren nach einem der vorangehenden Ansprüche,
**dadurch gekennzeichnet,**
**dass** als Grundkörper (18) eine Schaufel (11) mit einer Beschädigung verwendet wird, die Beschädigung durch Erzeugen einer Aussparung im Bereich der Beschädigung entfernt wird und als ergänzende Schaufelkomponente (19) ein Passstück (15) für die Aussparung erzeugt wird.

5. Verfahren nach Anspruch 4,
**dadurch gekennzeichnet,**
**dass** für das Passstück (15) ein von dem Originalmaterial der Schaufel (11) im Bereich der Beschädigung abweichendes Material gewählt wird, das zu einer Verbesserung der Eigenschaften der Schaufel (11) in diesem Bereich führt.

6. Verfahren nach Anspruch 5,
**dadurch gekennzeichnet,**
**dass** die Verbesserung der Eigenschaften in einer Verbesserung des Verschleißwiderstandes besteht.

## Claims

1. Method for making a blade for a turbo-engine, in particular a guide vane, in which a basic body (18) of the blade (11) is produced and this basic body (18) is connected permanently to at least one blade component (19) completing the basic body (18) to form the finished blade (11), only the at least one blade component (19) being produced directly on the basic body (18) by means of an additive manufacturing method,
**characterized in that** a plurality of completing blade components are produced directly on the basic body of the blade, wherein the blade components butt directly one against the other and together give a completing structure (23) for the basic body (18), the dimensions of which completing structure exceed the construction size capacity of the additive manufacturing plant used, by virtue of the basic body, between the production of the completing blade components (19), being displaced in each case in the additive manufacturing plant in order that the respectively adjacent blade component can be produced directly on the basic body.

2. Method according to Claim 1,
**characterized in that**
the at least one completing blade component (19) is produced by means of the manufacturing method on the basic body (18) serving as a substrate.

3. Method according to one of the preceding claims,
**characterized in that**
the at least one blade component (19) is manufactured from a material other than that of the basic body.

4. Method according to one of the preceding claims,
**characterized in that**
a blade (11) with damage is used as the basic body (18), the damage is removed by making a clearance in the region of the damage, and a fitting piece (15) for the clearance is made as the completing blade component (19).

5. Method according to Claim 4,
**characterized in that**
for the fitting piece (15), a material is selected which deviates from the original material of the blade (11) in the region of the damage and which leads to an improvement in the properties of the blade (11) in this region.

6. Method according to Claim 5,
**characterized in that**
the improvement in the properties comprises an improvement in the resistance to wear.

## Revendications

1. Procédé de production d'une aube destinée à une machine génératrice d'électricité, en particulier d'une aube directrice, dans le cadre duquel est produit un corps de base (18) de l'aube (11) et ledit corps de base (18) est relié fixe à au moins un composant d'aube (19) complétant le corps de base (18) en vue d'obtenir une aube (11) terminée, dans lequel seul le au moins un composant d'aube (19) est produit directement sur le corps de base (18) à l'aide d'un procédé de fabrication par addition,
**caractérisé en ce que**,
plusieurs composants d'aube de complétion sont produits directement sur le corps de base de l'aube, dans lequel les composants d'aube s'aboutent directement les uns au niveau des autres et constituent en commun pour le corps de base(18) une structure de complétion (23) dont les mesures dépassent la capacité de taille de construction de l'installation de fabrication par addition utilisée, grâce au déplacement du corps de base dans l'installation de fabrication par addition respectivement entre la fabrication des composants d'aube (19) de complétion afin que les composants d'aube respectivement adjacents puissent être fabriqués directement sur le corps de base.

2. Procédé selon la revendication 1,
**caractérisé en ce que**,
le au moins un composant d'aube (19) de complétion est produit sur le corps de base (18) servant de support à l'aide du procédé de fabrication.

3. Procédé selon l'une quelconque des revendications précédentes,
**caractérisé en ce que**,
au moins un composant d'aube (19) est fabriqué à partir d'un autre matériau que celui du corps de base.

4. Procédé selon l'une quelconque des revendications précédentes,
**caractérisé en ce que**,
une aube (11) présentant un dommage est utilisée comme corps de base (18), le dommage est éliminé par réalisation d'un évidement dans le secteur du dommage, et une cale d'ajustage (15) destinée à l'évidement est réalisée en tant que composant d'aube (19) de complétion.

5. Procédé selon la revendication 4,
**caractérisé en ce que**,
un matériau différent du matériau originel de l'aube (11) est choisi pour la cale d'ajustement (15) dans le secteur du dommage, ledit matériau entrainant une amélioration des propriétés de l'aube (11) au sein dudit secteur.

6. Procédé selon la revendication 5,
**caractérisé en ce que**,
l'amélioration des propriétés consiste en une amélioration de la résistance à l'usure.
